# EUROPÄISCHE PATENTSCHRIFT

(11) **EP 1 009 693 B1**
(45) Veröffentlichungstag und Bekanntmachung des Hinweises auf die Patenterteilung: **05.02.2003**
(21) Anmeldenummer: 97911102.8
(22) Anmeldetag: 17.11.1997
(51) Int. Cl.: B65G 21/22, F16C 29/04, E01B 25/10

(54) **MITTEL ZUR FÜHRUNG DER ROLLENDEN ODER GLEITENDEN BEWEGUNG VON OBJEKTEN ENTLANG EINER VORGEGEBENEN STRECKE**
MEANS FOR GUIDING THE ROLLING OR GLIDING MOVEMENT OF OBJECTS ALONG A GIVEN PATH
DISPOSITIF DE GUIDAGE POUR LE DEPLACEMENT D'OBJETS ROULANTS OU COULISSANTS LE LONG D'UN PARCOURS PREDETERMINE

(30) Priorität: 27.11.1996 CH 291796
(43) Veröffentlichungstag der Anmeldung: 21.06.2000
(73) Patentinhaber: IPT Weinfelden AG, 8570 Weinfelden (CH)
(72) Erfinder: EBERLE, Jürg, CH-8340 Hinwil (CH); SIEBENMANN, Dieter, CH-8332 Russikon (CH)
(74) Vertreter: Frei, Alexandra Sarah
(86) Internationale Anmeldenummer: CH9700436
(87) Internationale Veröffentlichungsnummer: WO98023509

(56) Entgegenhaltungen:
- DE-B- 1 014 925
- GB-A- 1 535 428
- US-A- 3 039 401
- US-A- 3 583 327
- US-A- 4 170 943
- US-A- 4 703 697
- US-A- 5 074 678

## Beschreibung

Die Erfindung bezieht sich auf ein Führungsmittel gemäss dem Oberbegriff des unabhängigen Patentanspruchs 1. Das Mittel dient zur Führung der rollenden oder gleitenden Bewegung von Objekten entlang einer vorgegebenen Strecke, wobei der räumliche Verlauf der vorgegebenen Strecke in weiten Grenzen frei wählbar ist. Die entlang der vorgegebenen Strecke bewegbaren Objekte sind beispielsweise einzelne entsprechend angetriebene Förderelemente, die mit einer Last beladbar sind, oder zu einer Kette verbundene derartige Förderelemente oder es handelt sich um ein Kraftübertragungsmittel in Form einer Kette oder einer Reihe von einzelnen Elementen.

Gemäss dem Stande der Technik besteht ein derartiges Führungsmittel üblicherweise entweder aus einem Führungskanal, in dem die zu bewegenden Objekte ganz oder mindestens teilweise gefangen sind und auf dessen Innenoberflächen sie abrollen oder gleiten, oder das Führungsmittel ist schienenanig und wird von den zu bewegenden Objekten, die auf Aussenoberflächen des Führungsmittels abrollen oder gleiten, umgriffen.

Üblicherweise wird für die Realisierung eines derartigen Führungsmittels zuerst der Verlauf der Strecke geplant, dann wird das Führungsmittel dem Streckenverlauf entsprechend in Form von diskreten Teilen hergestellt und dann werden diese Teile fest montiert. Dabei ist insbesondere an denjenigen Stellen, an denen die diskreten Teile zusammenzufügen sind, eine hohe Präzision notwendig oder es sind für einen ruhigen und ungestörten Lauf der Objekte an diesen Stossstellen spezielle Massnahmen zur Verbindung der Führungsmittelteile vorzusehen. Die Zahl der Stossstellen kann auch gering gehalten werden, indem möglichst lange, das heisst aber auch unhandliche und sehr spezifisch an einen Streckenverlauf angepasste Führungsmittelteile hergestellt werden.

Derartige Führungsmittel sind nicht nur aufwendig in Bezug auf ihre Herstellung und Montage, sie sind aus denselben Gründen auch aufwendig in Bezug auf spätere Veränderungen und/oder Erweiterungen, insbesondere weil ein grosser Teil des Materials nicht nur fest montiert sondern auch fest an einen bestimmten Streckenverlauf angepasst und deshalb für einen geänderten Streckenverlauf nicht mehr verwendbar ist.

In den Publikationen US-3039401, US-4170943, US-3583327 und US-4703697 sind Führungsmittel für Transportsysteme beschrieben, die nicht kompakte Führungskanäle darstellen, sondern käfigartige Anordnungen von Schienenelementen, die von voneinander beabstandeten diskreten Halteelementen in Position gehalten werden.

Die Erfindung stellt sich deshalb die Aufgabe, ein Führungsmittel zur Führung der rollenden oder gleitenden Bewegung von Objekten entlang einer vorgegebenen Strecke zu schaffen, welches Führungsmittel wie bekannte derartige Führungsmittel fest montierbar ist, zusätzlich aber einfacher als hergebrachte derartige Führungsmittel herstell- und montierbar und einfacher und mit weniger Aufwand veränder- und erweiterbar ist.

Diese Aufgabe wird gelöst durch das Führungsmittel, wie es in den Patentansprüchen definiert ist.

Die Lösung der Aufgabe wird erreicht, indem die Funktionen des zu realisierenden Systems nicht nur in eine unbewegte und eine bewegte Funktion (Führungsmittel und bewegtes Objekt) aufgeteilt wird, wie dies als Funktionenaufteilung auch den bekannten derartigen Systemen zugrunde liegt. Zusätzlich wird die unbewegte Funktion (Führungsmittel) aufgeteilt in eine führende und eine tragende Funktion, wobei das führende Mittel sich mit möglichst wenigen Unterbrüchen kontinuierlich über die ganze, vorgegebenen Strecke erstreckt und wobei das tragende Mittel ohne Nachteile für das System in eine Vielzahl von diskreten, einfach handhabbaren und austauschbaren Tragelementen aufgeteilt ist.

Das führende Mittel besteht aus einer Mehrzahl von Führungsschienen, die aus einem mindestens beschränkt biegbaren (vorteilhafterweise elastisch biegbaren), vorteilhafterweise endlos herstellbaren und vorteilhafterweise in grossen Längen transportier- und handhabbaren Profil. Ein derartiges Profil lässt sich nicht nur an verschiedenste Streckenverläufe mühelos anpassen sondern es lässt sich auch für einen geänderten Verlauf wieder verwenden.

Das tragende Mittel besteht aus einer Vielzahl von Tragelementen, die voneinander beabstandet entlang der vorgegebenen Strecke angeordnet sind und mit deren Hilfe die Führungsschienen in einer vorbestimmten gegenseitigen Anordnung und parallel zueinander und zur vorgegebenen Strecke gehalten werden, wobei diese Halterung vorteilhafterweise reversibel, das heisst beliebig lös- und wieder fixierbar ist. Die Ausdehnung der Tragelemente in Richtung der vorgegebenen Strecke ist vorteilhafterweise derart gering, dass sie unabhängig vom örtlichen Verlauf der vorgegebenen Strecke einsetzbar sind, wobei ihre Abstände beispielsweise der örtlichen Belastung des Führungsmittels anpassbar sind.

Die vorbestimmte gegenseitige Anordnung der Führungsschienen ist dabei an die durch das Führungsmittel zu führenden Objekte angepasst, das heisst die Führungsschienen bilden eine sich im wesentlichen gleichförmig über die vorgegebene Strecke erstreckende, käfigartige Anordnung, wobei entweder die Führungsflächen der Führungsschienen, auf denen die Objekte rollen oder gleiten, gegen das Innere des Käfigs gerichtet und die die Führungsschienen haltenden Teile der Tragelemente ausserhalb angeordnet sind oder wobei die Führungsflächen auf den Aussenseiten des Käfigs verlaufen und die entsprechenden Teile der Tragelemente im Inneren angeordnet sind.

Das tragende Mittel kann weiter unterteilt sein, indem die Vielzahl von die Führungsschienen haltenden Tragelementen oder mindestens ein Teil davon anstatt im wesentlichen irreversibel auf einer Basis montiert zu sein, auf mindestens einem Basiselement reversibel montiert ist. Dieses Basiselement erstreckt sich entlang mindestens eines Teils der vorgegebenen Strecke. Sind die Tragelemente und das Basiselement derart ausgestaltet, dass die Montagepositionen der Tragelemente relativ zum Basiselement einstellbar sind, kann das mindestens eine Basiselement ohne hohe Präzision entlang einer Strecke verlegt werden und kann die für die führenden Mittel notwendige Präzision bei der Montage der Tragelemente auf dem Basiselement erstellt werden.

Ein System, in dem das erfindungsgmässe Führungsmittel zur Anwendung kommt, weist also neben den hochportablen Objekten (z.B. Fördermittel in Form von Rollern, Wagen oder Ketten) Führungsmittelteile auf, die mindestens teilweise ebenfalls portabel, das heisst einfach austauschbar sind (Führungsschienen und gegebenenfalls Tragelemente) und Führungsmittelteile, die nicht portabel, das heisst nur mit bedeutend mehr Aufwand austauschbar sind (Basiselemente und gegebenenfalls Tragelemente), wobei diese Aufteilung nicht als funktionelle Aufteilung gemeint ist sondern als förmliche, materielle Aufteilung. Eine Rollenführung besteht also gemäss Erfindung beispielsweise aus einem festverlegten nichtportablen, immobilen Basiselement, aus separat ansetzbaren bzw. auswechselbaren, portablen Tragelementen und Führungsschienen und zugeordneten hochportablen, mobilen Fördermitteln. Alle diese Teile sind funktionell miteinander verbunden und bilden ein Fördersystem, das beliebig verändert und ausgebaut werden kann.

Im Sinne der Erfindung wird beispielsweise das Basiselement fest verlegt. Dann werden daran die Tragelemente austauschbar und gegebenenfalls einstellbar befestigt, dann werden die Führungsschienen von Tragelement zu Tragelement verlegt und vorteilhafterweise an jedem Tragelement befestigt. Als letzter Schritt werden die entlang der vorgegebenen Strecke zu bewegenden Objekte eingeführt.

Die mobilen Objekte sind hochportabel, also zu jeder Zeit, gegebenenfalls mitten im Betrieb austauschbar, während die portablen Teile der Führungsmittel zwar austauschbar sind, dies jedoch nur bei stillgelegtem Betrieb. Die nichtportablen Basiselemente sind mit den Baulichkeiten fest verbunden und können nicht im Sinne einer Portabilität ausgetauscht werden bzw. verändert werden.

Dies hat neben der schon geschilderten Flexibilität noch den folgenden Vorteil. Fest eingemauerte Führungen können bei Verschleiss nur umständlich ausgetauscht werden, auch geringe Änderungen zeitigen einen hohen Aufwand an Arbeit und Mitteln. Man hat es stets mit einem Ganzen zu tun und nicht mit einer Getrenntheit, in welcher verhältnismässig teuer ausgeführte Führungsfunktionen von verhältnismässig billig auszuführenden Tragfunktionen separat voneinander behandelt werden können. Die billigeren, tragenden Mittel werden für die tragende Funktion fest oder mindestens teilweise fest verlegt, während mindestens die teureren, führenden Mittel, die aber auch einem vermehrten Verschleiss ausgesetzt sind, abnehmbar, d.h. einfach ersetzbar, auf diese tragenden Mittel aufgesetzt sind.

Die nachfolgend aufgeführten Figuren zeigen zeichnerisch das Prinzip des erfindungsgemässen Führungsmittels und einige bevorzugte Ausführungsformen davon.
- **Figur 1**: zeigt in einem schematischen Schnitt quer zu einer vorgegebenen Strecke das Prinzip des erfindungsgemässen Führungsmittels.
- **Figur 2**: zeigt in derselben Darstellungsart wie Figur 1 als Vergleich ein Führungsmittel derselben Gattung gemäss dem Stande der Technik.
- **Figuren 3 und 4**: zeigen eine erste bevorzugte Ausführungsform des erfindungsgemässen Führungsmittels als dreidimiensionale Darstellung (Figur 3) und als Schnitt quer zur vorgegebenen Strecke durch ein Tragelement und durch ein mit Hilfe des Führungsmittels zu führendes Objekts (Figur 4).
- **Figur 5**: bis 9 zeigen weitere, beispielhafte Ausführungsformen des erfindungsgemässen Führungsmittels, wiederum im Schnitt quer zur vorgegebenen Strecke.

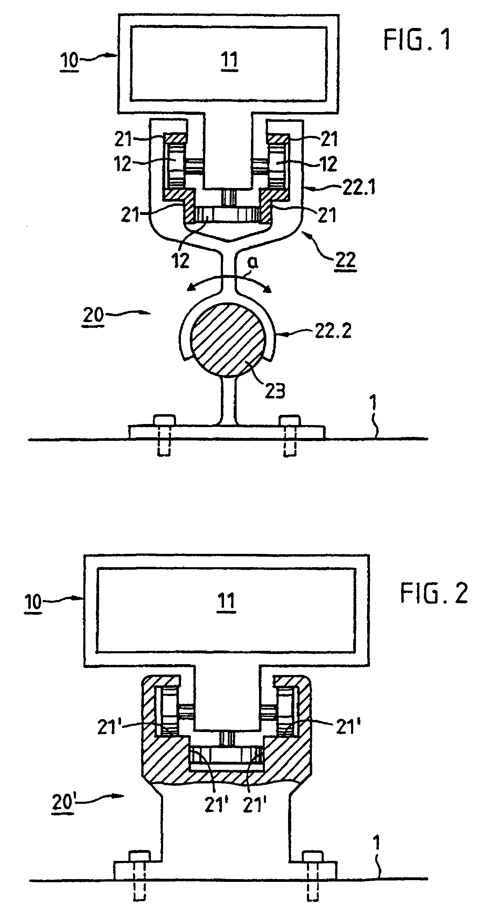

**Figur 1** zeigt an einer beispielhaften Ausführungsform des erfindungsgemässen Führungsmittels das Prinzip, das der Erfindung zugrunde liegt. Das Führungsmittel 20 ist im Schnitt senkrecht zur vorgegebenen Strecke dargestellt zusammen mit einem Objekt 10, das entlang der vorgegebenen Strecke durch das Führungsmittel geführt bewegbar ist. Das Objekt 10 ist beispielsweise ein mit einer Last 11 beladenes oder beladbares Fördermittel, das beispielsweise auf Rollen 12 rollt. Das Führungsmittel 20 weist ein führendes Mittel und ein tragendes Mittel auf.

Das führende Mittel ist im dargestellten Falle eine Anordnung von vier Führungsschienen 21, die sich im wesentlichen kontinuierlich, parallel zueinander und mindestens teilweise voneinander beabstandet über die vorgegebene Strecke erstrecken und einen Kanal-förmigen Käfig bilden, wobei die das Objekt 10 führenden Führungsflächen der Führungsschienen gegen das Innere des Käfigs gerichtet sind.

Das tragende Mittel besteht im dargestellten Falle aus einer Vielzahl von diskreten Tragelementen 22 (nur eines sichtbar) und aus einem Basiselement 23, wobei das Basiselement ortsfest, beispielsweise auf einem Gebäudeboden 1, an einer Gebäudewand oder an einer Gebäudedecke montiert ist.

Die Führungsschienen 21 sind möglichst lange Stücke von mindestens beschränkt biegbaren beispielsweise bandförmigen, vorteilhafterweise quasi endlos herstellbaren Profilen mit einem beispielsweise flachen, L-förmigen, U-förmigen oder ähnlich geformten Querschnitt. Sie bestehen je nach Anwendung und Belastung beispielsweise aus Metall oder Kunststoff. Sie werden von den Tragelementen 22 derart getragen, dass sie in zueinander paralleler Weise entlang der vorgegebenen Strecke verlaufen mit einer Präzision, die für das zu führende Objekt genügend ist.

Die Tragelemente 22 sind voneinander beabstandet entlang der vorgegebenen Strecke angeordnet. Sie weisen einerseits einen den durch die Führungsschienen gebildeten Käfig umgreifenden Haltebereich 22.1 zur Halterung der Führungsschienen 21 auf, mit dessen Hilfe die Führungsschienen in der vorgegebenen Anordnung haltbar und befestigbar sind, und einen Befestigungsbereich 22.2, mit Hilfe dessen sie auf einer beliebigen Basis oder, wie dargestellt, auf einem mit zum Führungsmittel gehörenden Basiselement 23 vorteilhafterweise reversibel befestigbar sind.

Die Führungsschienen 21 sind mindestens derart biegbar, dass sie der vorgegebenen Strecke entlang verlegt werden können. Die Tragelemente 22 haben vorteilbafterweise in der Richtung der vorgegebenen Strecke eine derart geringe Ausdehnung, dass sie bei jedem geplanten Streckenverlauf, das heisst insbesondere auch auf denjenigen Streckenbereichen mit den kleinsten Krümmungsradien unverändert anwendbar sind. Die mechanische Stabilität der Führungsschienen 21 und die Abstände zwischen den Tragelementen 22 sind derart aufeinander abgestimmt, dass die Führungsschienen 21 in den Zwischenräumen zwischen den Tragelementen 22 die durch eine Bewegung des Objektes 10 auf sie wirkenden Kräfte im wesentlichen ohne Deformation aufnehmen können. Die Abstände zwischen den Tragelementen 22 können in Streckenbereichen mit hoher Belastung, z.B. in stark gekrümmten Bereichen kleiner sein als in Bereichen mit kleinerer Belastung, z.B. in geradlinigen Bereichen.

Das erfindungsgemässe Führungsmittel besteht also im wesentlichen aus einer Anordnung von Führungsschienen 21 und aus Tragelementen 22, wobei die Führungsschienen 21 und die Tragelemente 22 unabhängig sind vom spezifischen, geplanten Streckenverlauf. Führungsschienen 21 und Tragelemente 22 stellen zusammen einen Bausatz dar, mit dessen Hilfe verschiedenste Strekkenverläufe realisierbar sind. Dabei sind der Querschnitt der Führungsschienen und der Haltebereich der Tragelemente, die zusammen die Anordnung der Führungsflächen definieren, auf das zu führende Objekt abgestimmt und sind lediglich die Zahl der Tragelemente 22 und die Länge der Führungsschienen 21 an einen spezifischen Streckenverlauf anzupassen.

Da die Führungsschienen 21 nur sehr örtliche und dadurch kleine Belastungen übertragen müssen, sind sie relativ dünn und leicht und dadurch in grossen Längen noch bequem handhabbar, gegebenenfalls in aufgerollter Form. Durch das Baukastensystem mit derart wenig verschiedenen Bestandteilen ist ein erfindungsgemässes Führungsmittel nicht nur einfach herstellbar, sondern auch sehr einfach veränder- oder erweiterbar.

Die Tragelemente 22 sind mit ihrem Befestigungsbereich 22.2, wie bereits weiter oben erwähnt, an einer Basis befestigt. Diese Basis kann direkt ein Gebäudeteil (Boden, Wand oder Decke) oder ein fremder Maschinenteil sein. Es ist aber vorteilhaft, die Tragelemente 22, wie in der Figur 1 dargestellt, auf einem Basiselement 23 zu montieren, welches Basiselement 23 sich mindestens über einen Teil der vorgegebenen Strecke erstreckt. Es ist ferner vorteilhaft, wenn die Montage der Tragelemente 22 am Basiselement 23 einstellbar ist (verschiedene, mögliche Montagepositionen). In einem solchen Falle kann das Basiselement 23 mit einer kleineren Präzision und mit einem vereinfachten Verlauf verlegt werden und kann die für das zu bewegende Objekt notwendige Präzision erst beim Montieren der Tragelemente 23 eingestellt werden. Das in der Figur 1 dargestellte Basiselement 23 ist beispielsweise eine Stange oder ein Rohr mit einem runden Querschnitt an dem die Tragelemente 22 in an sich beliebigen Schwenkpositionen (Doppelpfeil a) montierbar, beispielsweise aufsteckbar sind.

Das Basiselement 23 erstreckt sich beispielsweise über mindestens einen Teil der vorgegebenen Strecke. Ein derartiges Basiselement 23 ist in seiner Form dem spezifischen Streckenverlauf anzupassen. Es muss sich aber nicht lükkenlos über die gesamte Strecke erstrecken, das heisst, es kann aus beliebig vielen Einzelelementen bestehen, die nicht besonders sorgfältig aneinander angeschlossen werden müssen. Es ist auch ohne weiteres denkbar, dass ein Führungsmittel zusätzlich zu Bereichen mit Basiselement auch Bereiche ohne Basiselement aufweist, das heisst Bereiche mit direkt an Bauteilen oder anderen, nicht zum Führungsmittel gehörenden Strukturen befestigten Tragelementen.

**Figur 2** zeigt als Vergleich zum Führungsmittel gemäss Erfindung (Figur 1) schematisch ein Führungsmittel 20' gemäss dem Stande der Technik, wie es für ein gleiches, zu bewegendes Objekt 10 ausgebildet ist. Für das Führungsmittel 20' ist die führende Funktion und die tragende Funktion nicht voneinander getrennt, sodass die Anforderung der möglichst kontinuierlichen Erstreckung über die ganze vorgegebene Strecke für das ganze Führungsmittel 20' gilt. Es ergibt sich daraus ein dem Streckenverlauf angepasstes Führungsmittel 20' mit einer Mehrzahl von als Führungsschienen dienenden sich entlang der vorgegebenen Strecke erstreckenden Oberflächenbereichen 21'. Das Führungsmittel ist an einer beliebigen Basis (beispielsweise Gebäudeboden 1) befestigt.

Soll das in der Figur 2 dargestellte Führungsmittel 20' als Baukasten ausgebildet sein, wird dieser eine Anzahl verschiedener Führungsmittelstücke verschiedener Form (geradlinige Teile verschiedener Längen und in verschiedenen Richtungen und mit verschiedenen Krümmungsradien gekrümmte Teile) aufweisen müssen und eventuell Mittel zur Verbindung der Schienenbereiche 21' zwischen den Führungsmittelstücken. Entweder werden dabei die vorhandenen Führungsmittelstücke die Planung eines Streckenverlaufs limitieren oder es müssen für jede geplante Strecke entsprechende Stücke speziell hergestellt werden. Insbesondere ist ein einmal realisierter Streckenverlauf schwer veränderbar und deshalb auch schwer erweiterbar.

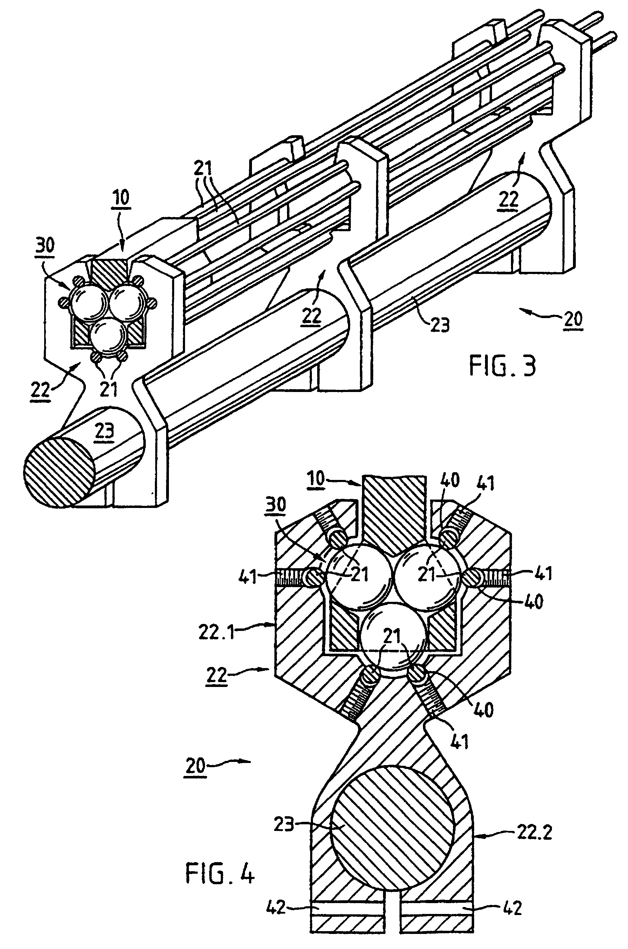

**Figur 3** zeigt als dreidimensionale Darstellung ein Teilstück einer beispielhaften Ausführungsform eines erfindungsgemässen Führungsmittels. Es handelt sich um ein Führungsmittel 20 für Objekte 10, die sich mittels Gruppen 30 von je drei oder zwei Kugeln im Führungsmittel 20 bewegen, wobei die Kugeln jeder Gruppe auf je zwei Führungsschienen 21 und auf den anderen Kugeln der. Gruppe abrollen. Derartige Systeme sind beispielsweise beschrieben in der Publikation EP-0387318 (bzw. US-5074678), wobei für die in der genannten Publikation beschriebenen Systeme als Führungsmittel entsprechende, kompakte Führungskanäle vorgesehen sind, die je nach Ausgestaltung des mit Hilfe des Führungsmittels zu bewegenden Objekts 10 eine sich über ihre Länge erstreckende, schlitzförmige Öffnung aufweist oder in sich geschlossen ist.

Das Führungsmittel für ein derartiges System ist nun erfindungsgemäss nicht ein kompakter Führungskanal, sondern ein Führungsmittel 20, das wiederum im wesentlichen aus einer Anordnung von Führungsschienen 21 (in diesem Falle sechs), aus einer Vielzahl von diskreten Tragelementen 22 und gegebenenfalls einem Basiselement 23 besteht. Die Führungsschienen 21 sind durch die Haltebereiche 22.1 der Tragelemente 22 derart gehalten, dass sie wiederum eine sich über die vorgegebene Strecke im wesentlichen gleichförmig erstreckenden käfigartige Anordnung bilden, auf deren inneren Oberflächen oder mindestens einem Teil davon das Objekt oder mindestens Teile davon rollen. Das Objekt 10 ist in diesem Führungsmittel 20 in derselben Weise bewegbar wie in einem Führungskanal gemäss dem Stande der Technik.

Das in der Figur 3 dargestellte Führungsmittel eignet sich insbesondere für eine erfindungsgemässe Ausgestaltung, da das Objekt 10 auf Kugeln rollt, das heisst, eine theoretisch linienförmige Schienen benötigt. Führungsschienen für eine derartige Anwendung haben vorteilhafterweise, wie in der Figur 3 dargestellt, einen kreisrunden Querschnitt und sind deshalb in allen Richtungen gleich biegbar und können bei der Montage beliebig verdreht werden.

Neben den Vorteilen bei der Montage und bei Veränderungen des erfindungsgemässen Führungsmittels gegenüber demjenigen gemäss dem Stande der Technik ist die viel einfachere Realisierbarkeit von Zugängen verschiedenster Art zum Objekt 10 entweder zwischen den Führungsschienen hindurch oder in Bereichen, in denen ein Teil der Führungsschienen unterbrochen ist, deutlich aus der Figur 3 ersichtlich.

**Figur 4** zeigt im Detail einen Schnitt quer zur vorgegebenen Strecke durch ein Tragelement 22, durch ein Objekt 10 und durch das Basiselement 23 eines Systems gemäss Figur 3.

Das Tragelement 22 weist einen Haltebereich 22.1 auf, der die Anordnung der Führungsschienen umgreift und auf dessen Innenseite die sechs Führungsschienen 21 mit kreisrundem Querschnitt in entsprechenden, sich an der Oberfläche verengenden Schlitzen 40 gehalten sind. Die Führungsschienen 21 werden bei der Montage in die Schlitze 40 eingeschnappt und dann durch Stellschrauben (nicht dargestellt), die durch die Gewindelöcher 41 eingeschraubt sind, gegen die Öffnung der Schlitze 40 gedrückt. Die Stellschrauben erlauben auch ein Nachstellen von abgenutzten Führungsschienen.

Das Tragelement 22 weist ferner einen Befestigungsbereich 22.2 auf, der im dargestellten Falle eine runde Öffnung für das Basiselement 23 aufweist. Das Tragelement wird auf dem Basiselement festgeklemmt mittels eines Bolzens oder einer Schraube (nicht dargestellt) durch das entsprechende Loch 42.

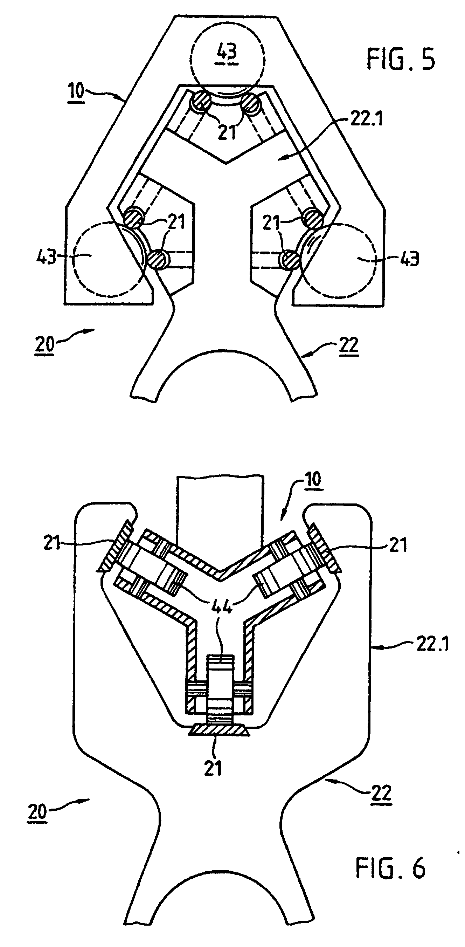

**Figur 5** zeigt mit Blick in der Richtung der vorgegebenen Strecke den Haltebereich 22.1 eines weiteren Tragelements 22 für eine weitere Ausführungsform des erfndungsgemässen Führungsmittels 20 mit einem zu führenden Objekt 10. In dieser Ausführungsform rollt das Objekt 10 auf der Aussenseite des durch die Führungsschienen 21 gebildeten Käfigs, den es teilweise umgreift. Die Haltebereiche 22.1 der Tragelemente 22 sind auf der Innenseite dieses Käfigs angeordnet. Das Objekt 10 weist beispielsweise Kugeln 43 oder Rollen auf, mit deren Hilfe es auf den Führungsflächen der Führungsschienen 21 abrollt.

**Figur 6** zeigt wie Figur 5 den Haltebereich 22.1 eines weiteren Tragelementes 22 für eine weitere Ausführungsform des erfindungsgemässen Führungsmittels 20 zusammen mit einem zu führenden Objekt 10. Das Objekt 10 weist als Rollkörper Gruppen von drei Rollen 44 auf, die auf entsprechenden bandförmigen Führungsschienen 21 abrollen. Die Führungsschienen 21 bilden einen Käfig, auf dessen Innenseite die Rollkörper 44 abrollen und die von aussen durch die Haltebereiche 22.1 der Tragelemente 22 in ihrer vorgegebenen Position gehalten sind.

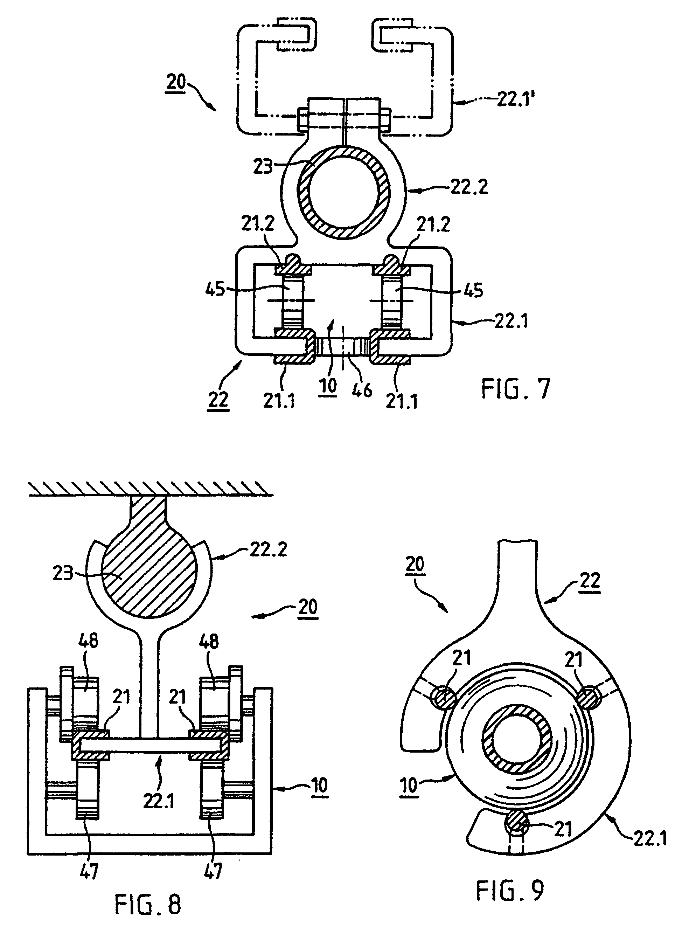

**Figur 7** zeigt im Schnitt quer zur vorgegebenen Strecke eine weitere Ausführungsform des erfindungsgemässen Führungsmittels 20 mit einem zu führenden Objekt 10, von dem nur die Rollen dargestellt sind. Das Objekt 10 ist beispielsweise eine Gliederkette mit Gruppen von zwei Laufrollen 45 und einer Führungsrolle 46. Das Führungsmittel 20 weist wiederum ein Basiselement 23 (hier ein Rohr mit rundem Querschnitt) auf, an dem diskrete Tragelemente 22 angeordnet sind. Von Tragelement zu Tragelement verlaufen Führungsschienen, die beispielsweise als Kunststoffprofile 21.1 und 21.2 ausgebildet sind. Dabei hat das eine der Profile (21.1) einen U-förmigen Querschnitt und dient als Führungsschiene für eine Laufrolle 45 und die Führungsrolle 46. Das U-förmige Profil 21.1 ist über entsprechend ausgeformte Bereiche des Haltebereiches 22.1 des Tragelementes 22 gestülpt, wobei es vorteilhafterweise leicht deformiert wird und dadurch nicht weiter befestigt werden muss.

Das Profil 21.2 ist ein im wesentlichen bandförmiges Profil mit einem Kamm, der an der der Lauffläche gegenüberliegenden Seite des Profils angeordnet ist und der als Formschlussmittel dient. Dieser Kamm wird in einer entsprechenden Nut im Haltebereich 22.1 des Tragelementes 22 formschlüssig gehalten.

Strichpunktiert ist in der Figur 7 auch ein zweites Tragelement 22' dargestellt, das in gegenüber dem Tragelement 22 umgekehrter Ausrichtung am Basiselement 23 befestigt ist. Dieses zweite Tragelement 22' ist Teil eines weiteren Führungsmittelbereichs desselben Systems oder eines anderen Systems, wobei die Tragelemente der beiden Führungsmittelbereiche beispielsweise alternierend auf dem Basiselement 23 angeordnet oder als Zwillingselemente ausgebildet sein können.

**Figur 8** zeigt eine weitere Ausführungsform des erfindungsgemässen Führungsmittels, wiederum im Schnitt quer zur vorgegebenen Strecke. Dieses weist wiederum eine käfigförmige Anordnung von Führungsschienen 21 auf, wobei zwei Führungsschienen mit einem U-förmigen Querschnitt und je drei Führungsflächen vorgesehen sind. Die Führungsflächen der Führungsschienen 21 sind gegen aussen ausgerichtet und dienen zur Führung der Rollkörper 47 und 48 des zu führenden Objektes 10. Das Objekt 10 umgreift die Anordnung von Führungsschienen. Die Führungsschienen 21 sind in ihrer Position gehalten durch den Haltebereich 22.1 einer Vielzahl von Tragelementen 22. Der Haltebereich 22.1 ist im Innern der käfigartigen Anordnung der Führungsschienen 21 angeordnet und weist in diesem Falle die sehr einfache Form eines T-förmigen Trägers auf, wobei auf den Enden des Querbalkens die Führungsschienen aufgestülpt sind.

**Figur 9** zeigt als letztes Beispiel einer Ausführungsform des erfindungsgemässen Führungsmittels die Führung eines Objekts 10 in Form einer Gliederkette, mit Hilfe derer beispielsweise eine Kraft auf einem in weiten Grenzen beliebig wählbaren Weg übertragbar ist. Das Führungsmittel 20 und die Gliederkette sind in einem Schnitt quer zu diesem Weg dargestellt. Derartige Gliederketten sind beispielsweise beschrieben in den Publikationen DE-2220259 (bzw. US-3757514) oder DE-3121835 (bzw. US-4397145). Das Führungsmittel 20 besteht wiederum aus einer käfigartigen Anordnung von drei Führungsschienen 21, in welchem Käfig die Gliederkette gefangen ist, wobei die kugelig ausgestalteten Kettenglieder auf gegen das Käfiginnere gerichteten Führungsflächen der Führungsschienen 21 gleiten. Die Tragelemente 22 sind prinzipiell gleich ausgestaltet wie die tragelemente der Figuren 3, 4, 6 und 7, das heisst mit Haltebereichen 22.1, die die Anordnung der Führungsschienen 21 umgreifen.

## Patentansprüche

1. Mittel zur Führung einer rollenden oder gleitenden Bewegung eines Objektes (10) entlang einer vorgegebenen Strecke mit einem frei wählbaren räumlichen Verlauf, wobei das Führungsmittel (20) eine Mehrzahl von an den Verlauf der vorgegebenen Strecke anpassbaren, sich parallel zueinander, mindestens teilweise voneinander beabstandet und im wesentlichen kontinuierlich über die vorgegebene Strecke erstreckende Führungsschienen (21) mit Führungsflächen aufweist und eine Vielzahl von entlang der vorgegebenen Strecke angeordneten, diskreten Tragelementen (22) mit Haltebereichen (22.1) und wobei die Führungsschienen (21) durch die Haltebereiche (22.1) der Tragelemente (22) derart gehalten sind, dass sie eine käfigartige, sich entlang der vorgegebenen Strecke erstreckende Anordnung bilde, **dadurch gekennzeichnet, dass** mindestens ein Basiselement (23) entlang mindestens eines Teils der vorgegebenen Strecke fest verlegt ist und dass in diesem Teil der vorgegebenen Strecke die Tragelemente (22) nur auf dem Basiselement (23) montiert sind, wobei die Tragelemente voneinander beabstandet sind und die Position der Tragelemente (22) relativ zum fest montierten Basiselement (23) einsteilbar ist, wodurch es möglich wird, die Präzision der Position der Führungsschienen gegenüber der Präzision der Position des Basiselementes zu erhöhen und/oder mit nur einem Basiselement Führungsmittelbereiche mit verschiedenen Ausrichtungen der Tragelemente relativ zum Basiselement zu realisieren.

2. Führungsmittel nach Anspruch 1, **dadurch gekennzeichnet, dass** die Haltebereiche (22.1) der Tragelemente (22) im Innern der käfigartigen Anordnung angeordnet und die Führungsflächen der Führungsschienen (21) in der Anordnung gegen aussen gerichtet sind.

3. Führungsmittel nach Anspruch 1, **dadurch gekennzeichnet, dass** die Haltebereiche (22.1) der Tragelemente (22) aussen an der käfigartigen Anordnung angeordnet und die Führungsflächen der Führungsschienen (21) in der Anordnung gegen innen gerichtet sind.

4. Führungsmittel nach einem der Ansprüche 1 bis 3, **dadurch gekennzeichnet, dass** die Führungsschienen (21) aus endlos herstellbaren Profilen aus Metall oder Kunststoff bestehen.

5. Führungsmittel nach einem der Ansprüche 1 bis 4, **dadurch gekennzeichnet, dass** die Führungsschienen (21) einen kreisrunden, flachen U-förmigen oder L-förmigen Querschnitt haben.

6. Führungsmittel nach einem der Ansprüche 1 bis 5, **dadurch gekennzeichnet, dass** die Führungsschienen (21) und die Haltebereiche (22.1) der Tragelemente (22) miteinander kooperierende Formschlussmittel aufweisen.

7. Führungsmittel nach einem der Ansprüche 1 bis 5, **dadurch gekennzeichnet, dass** die Führungsschienen (21) mit Stellschrauben nachstellbar an den Haltebereichen (22.1) der Tragelemente (22) befestigt sind.

8. Führungsmittel nach einem der Ansprüche 1 bis 7, **dadurch gekennzeichnet, dass** die diskreten Tragelemente (22) in Richtung der vorgegebenen Strecke eine derart geringe Ausdehnung haben, dass sie auch auf gekrümmten Streckenteilen unverändert anwendbar sind.

9. Führungsmittel nach einem der Ansprüche 1 bis 8, **dadurch gekennzeichnet, dass** die Abstände zwischen den Tragelementen (22) der örtlichen Belastung der Führungsschienen mittel angepasst sind.

10. Führungsmittel nach einem der Ansprüche 1 bis 9, **dadurch gekennzeichnet, dass** die Tragelemente (22) voneinander beabstandet auf mindestens einem Basiselement (23) montiert sind, wobei das Basiselement (23) entlang mindestens eines Teils der vorgegebenen Strecke fest verlegt ist.

11. Führungsmittel nach Anspruch 10, **dadurch gekennzeichnet, dass** die Position der Tragelemente (22) relativ zu dem mindestens einen Basiselement (23) einstellbar ist.

12. Führungsmittel nach Anspruch 11, **dadurch gekennzeichnet, dass** das Basiselement (23) einen kreisrunden Querschnitt hat und dass die Tragelemente (22) darauf in verschiedenen Schwenkpositionen montierbar sind.

13. Führungsmittel nach einem der Ansprüche 10 bis 12, **dadurch gekennzeichnet, dass** auf einem Basiselement (23) Tragelemente (22) von Führungsmitteln verschiedener vorgegebener Strecken oder Streckenbereichen montiert sind.

14. Führungsmittel nach einem der Ansprüche 10 bis 12, **dadurch gekennzeichnet, dass** auf einem Basiselement (23) Zwillingstragelemente montiert sind, welche Zwillingstragelemente zwei Haltebereiche aufweisen, die relativ zum Basiselement verschiedene Positionen haben.

15. Anwendung eines Führungsmittels nach Anspruch 2 zur Führung von Objekten (10), die die Anordnung von Führungsschienen (21) teilweise umgreifen.

16. Anwendung eines Führungsmittels nach Anspruch 3 zur Führung von Objekten (10), die ganz oder teilweise in der käfigartigen Anordnung von Führungsschienen (21) gefangen sind.

17. Anwendung nach Anspruch 15 oder 16, **dadurch gekennzeichnet, dass** die Objekte mit einer Last belastbare einzelne oder zu einer Kette verbundene Fördermittel sind oder Kraftübertragungsmittel.

## Claims

1. Means for guiding a rolling or gliding movement of an object (10) along a given path with a freely selectable, spatial course, wherein the guidance means (20) comprise a plurality of guide rails (21) with guide faces, the guide rails being adaptable to the course of the given path and extending in parallel to one another and at least partly spaced from each other substantially continuously along the given path, and a plurality of discreet support elements (22), arranged along the given path and comprising holding areas (22.1), and wherein the guide rails (21) are held by the holding areas (22.1) of the support elements (22) in such a way that they form a cage-like arrangement extending along the given path, **characterized in that** at least one base element (23) is fixedly mounted along at least part of the given path and that on this part of the given path the support elements (22) are mounted only to the base element (23), wherein the support elements (22) are mutually spaced and the position of the support elements (22) relative to the fixedly mounted base element (23) is adjustable such allowing to increase the precision of the position of the guide rails in relation to the precision of the position of the base element and/or to realize guidance means regions with only one base element and different orientations of the support elements in relation to the base element.

2. Guidance means according to claim 1, **characterized in that** the holding areas (22.1) of the support elements (22) are located in the interior of the cage-like arrangement and the guide faces of the guide rails (21) in the arrangement are directed outwards.

3. Guidance means according to claim 1, **characterized in that** the holding areas (22.1) of the support elements (22) are positioned externally on the cage-like arrangement and the guide faces of the guide rails (21) in the arrangement are directed inwards.

4. Guidance means according to one of the claims 1 to 3, **characterized in that** the guide rails (21) comprise continuously manufacturable, metal or plastic profiles.

5. Guidance means according to one of the claims 1 to 4, **characterized in that** the guide rails (21) have a circular, flat, U-shaped or L-shaped cross-section.

6. Guidance means according to one of the claims 1 to 5, **characterized in that** the guide rails (21) and holding areas (22.1) of the support elements (22) have mutually cooperating interlocking means.

7. Guidance means according to one of the claims 1 to 5, **characterized in that** the guide rails (21) are fixed in resettable manner by setscrews to the holding areas (22.1) of the support elements (22).

8. Guidance means according to one of the claims 1 to 7, **characterized in that** the discreet support elements (22), in the direction of the given path, have such a limited extension that they are usable in unchanged form on curved path portions.

9. Guidance means according to one of the claims 1 to 8, **characterized in that** the spacings between the support elements (22) are adapted to the local loading of the guide rails.

10. Guidance means according to one of the claims 1 to 9, **characterized in that** the support elements are mounted to the at lest one base element (23) in a mutually spaced manner, whereby the base element (23) is installed fixedly along at least part of the predetermined course.

11. Guidance means according to claim 10, **characterized in that** the position of the support elements (23) in relation to the at least one base element (23) is adjustable.

12. Guidance means according to claim 11, **characterized in that** on a base element (23) has a circular cross-section and that the support elements (22) are installable thereon in different pivoting positions.

13. Guidance means according to one of claims 10 to 12, **characterized in that** on a base element (23) are installed support elements (22) of guidance means of different, given paths or path areas.

14. Guidance means according one of claims 10 to 12, **characterized in that** on a base element are installed twin support elements, which have two holding areas, which have different positions relative to the base element.

15. Use of a guidance means according to claim 2 for guiding objects (10), which partly embrace the arrangement of guide rails (21).

16. Use of a guidance means according to claim 3 for guiding objects (10), which are wholly or partly trapped in the cage-like arrangement of guide rails (21).

17. Use according to claim 15 or 16, **characterized in that** the objects are chain-linked or individual conveying means loadable with a load or force transmission means.

## Revendications

1. Moyen pour guider un mouvement roulant ou glissant d'un objet (10) le long d'une voie prédéterminée avec un parcours dans l'espace pouvant être choisi librement, le moyen de guidage (20) présentant une pluralité de rails de guidage (21) avec des surfaces de guidage pouvant être adaptées au parcours de la voie prédéterminée, s'étendant parallèlement les unes aux autres, au moins partiellement avec un écart les uns des autres et essentiellement de manière continue sur la voie prédéterminée, ainsi qu'une pluralité d'éléments porteurs (22) discrets avec des zones de maintien (22.1) disposés le long de la voie prédéterminée, et les rails de guidage (21) étant maintenus par les zones de maintien (22.1) des éléments porteurs (22) de façon à former un agencement en forme de cage le long de la voie prédéterminée, **caractérisé en ce qu'**au moins un élément de base (23) est posé de manière fixe le long d'au moins une partie de la voie prédéterminée et que, dans cette partie de la voie prédéterminée, les éléments porteurs (22) sont montés seulement sur l'élément de base (23), les éléments porteurs (22) étant écartés les uns des autres et leur position étant réglable relativement à l'élément de base (23) monté de manière fixe, ce qui permet d'augmenter la précision de la position des rails de guidage par rapport à la précision de la position de l'élément de base et/ou de réaliser avec un seul élément de base des zones de moyen de guidage dans lesquelles les éléments porteurs ont différentes orientations relativement à l'élément de base.

2. Moyen de guidage selon la revendication 1, **caractérisé en ce que** les zones de maintien (22.1) des éléments porteurs (22) sont disposées à l'intérieur de l'agencement en forme de cage et les surfaces de guidage des rails de guidage (21) dans l'agencement sont orientées vers l'extérieur.

3. Moyen de guidage selon la revendication 1, **caractérisé en ce que** les zones de maintien (22.1) des éléments porteurs (22) sont disposées à l'extérieur sur l'agencement en forme de cage et les surfaces de guidage des rails de guidage (21) dans l'agencement sont orientées vers l'intérieur.

4. Moyen de guidage selon l'une des revendications 1 à 3, **caractérisé en ce que** les rails de guidage (21) sont constitués de profilés pouvant être fabriqués sans fin en métal ou en matière plastique.

5. Moyen de guidage selon l'une des revendications 1 à 4, **caractérisé en ce que** les rails de guidage (21) ont une section circulaire, plate en forme de U ou de L.

6. Moyen de guidage selon l'une des revendications 1 à 5, **caractérisé en ce que** les rails de guidage (21) et les zones de maintien (22.1) des éléments porteurs (22) présentent des moyens de liaison solidaire avec correspondance de forme coopérant les uns avec les autres.

7. Moyen de guidage selon l'une des revendications 1 à 5, **caractérisé en ce que** les rails de guidage (21) sont fixés de manière ajustable avec des vis réglables sur les zones de maintien (22.1) des éléments porteurs (22).

8. Moyen de guidage selon l'une des revendications 1 à 7, **caractérisé en ce que** les éléments porteurs (22) discrets ont, dans la direction de la voie prédéterminée, un allongement faible de telle sorte qu'ils peuvent être appliqués sans changement aussi à des parties de voies courbes.

9. Moyen de guidage selon l'une des revendications 1 à 8, **caractérisé en ce que** les écarts entre les éléments porteurs (22) sont adaptés en moyenne à la charge locale des rails de guidage.

10. Moyen de guidage selon l'une des revendications 1 à 9, **caractérisé en ce que** les éléments porteurs (22) sont montés avec un écart les uns des autres sur au moins un élément de base (23), ledit élément de base (23) étant posé de manière fixe le long d'au moins une partie de la voie prédéterminée.

11. Moyen de guidage selon la revendication 10, **caractérisé en ce que** la position des éléments porteurs (22) est réglable relativement à au moins un élément de base (23).

12. Moyen de guidage selon la revendication 11, **caractérisé en ce que** l'élément de base (23) a une section circulaire et les éléments porteurs (22) peuvent être montés dessus dans des positions de pivotement différentes.

13. Moyen de guidage selon l'une des revendications 10 à 12, **caractérisé en ce que** des éléments porteurs (22) de moyens de guidage de différentes voies ou zones de voies prédéterminées sont montés sur un élément de base (23).

14. Moyen de guidage selon l'une des revendications 10 à 12, **caractérisé en ce que** des éléments porteurs jumelés, présentant deux zones de maintien ayant des positions différentes relativement à l'élément de base, sont montés sur un élément de base (23).

15. Utilisation d'un moyen de guidage selon la revendication 2 pour guider des objets (10) qui enveloppent partiellement l'agencement de rails de guidage (21).

16. Utilisation d'un moyen de guidage selon la revendication 3 pour guider des objets (10) qui sont pris totalement ou partiellement dans l'agencement de rails de guidage (21) en forme de cage.

17. Utilisation selon la revendication 15 ou 16, **caractérisée en ce que** les objets sont différents moyens de transport pouvant être chargés avec une charge ou reliés pour former une chaîne ou bien des moyens de transmission de force.
